# EUROPEAN PATENT SPECIFICATION

(11) **EP 1 315 870 B1**
(45) Date of publication and mention of the grant of the patent: **26.12.2007**
(21) Application number: 01982256.8
(22) Date of filing: 06.09.2001
(51) Int. Cl.: E04B 1/78, B41M 5/26

(54) **MINERAL WOOL PRODUCT AND MANUFACTURING METHOD**
PRODUKT AUS MINERALWOLLE UND DEREN HERSTELLUNGSMETHODE
PRODUIT EN LAINE MINERALE ET PROCEDE DE FABRICATION

(30) Priority: 06.09.2000 DE 10043907; 17.10.2000 DE 20017788 U
(43) Date of publication of application: 04.06.2003
(73) Proprietor: SAINT-GOBAIN ISOVER, 92400 Courbevoie (FR)
(72) Inventor: BIHY, Lothar, D-67657 Kaiserslautern (DE); ARMBRUST, Manfred, D-67117 Limburgerhof (DE); BECKER, Michael, D-67069 Ludwigshafen (DE); KELLER, Clemens, 67376 Harthausen (DE); TRAPPMANN, Jürgen, D-69214 Eppelheim (DE)
(74) Representative: GROSSE BOCKHORNI SCHUMACHER
(86) International application number: PCT/EP2001/010298
(87) International publication number: WO 2002/020911

(56) References cited:
- WO-A-01/14148
- DE-A- 19 542 403
- US-A- 5 069 122

## Description

This invention relates to a mineral wool product and to a method and device for producing mineral wool products according to the preambles of claims 1; 9 and 16.

Mineral wool products are used in a variety of forms for insulation purposes, e.g. for facade and roof insulation. Since these products have a very long service life when used for such applications, a problem arises at the end of their service life, e.g. when a house is demolished,-in that no information is available about the manufacturer, the composition, etc. of the mineral wool products, which then constitute waste. However, such information is absolutely essential if the mineral wool product is to be correctly disposed of or recycled. One aim is thus to apply to the mineral wool products a permanent mark, which can provide information about the manufacturer, composition, etc. From the prior art, methods of marking mineral wool products by providing the finished product with lettering, for example, are already known. This is done, for example, by sticking on printed paper, film or the like, or by using a colorant for the lettering. The US 5,443,902 describes examples of marking methods in which stickers or stencils are used, or in which cellulose paper is stuck on with glass-fibre adhesive. Another alternative known from the prior art is to burn the mark into the surface of the mineral wool product. In this case, an appropriate means of heating, e.g. a laser, is used to burn a portion of the surface of the mineral wool product, the mark being formed by the combustion products left behind. This is described, for example, in the DE 195 42 403. The document WO 97/29253 shows insulating panels, which are sewed together by coloured threads.

What all these marking options for mineral wool products have in common, however, is that additional materials which differ from the mineral wool product are present on the surface of the mineral wool product. This has the disadvantage that the foreign substances may limit the range of applications for the mineral wool product. This applies in particular when the marking means applied additionally to the product surface do not satisfy the requirements to be met by the mineral wool product, e.g. in respect of flame resistance. The methods described above for the subsequent lettering or marking of the product have the added disadvantage that they are often very costly and, in particular, very time consuming, and that due to the downstream marking facility, the production line is longer.

European patent EP 0 928 392 discloses an insulator element mark in the form of an adhesive- or plaster-type coating which differs in colour from the mineral fibre layer.

One disadvantage of this system is that this surface layer on the insulator element is only of one colour, and therefore only serves to identify one characteristic. An added disadvantage is that at least parts of the surface of the insulator element are altered by this coating.

Utility model DE 296 03 918 discloses a marking system in which a marker strip with lettering on the side facing the support element is positioned between the fibre mat and the support material.

This system has the disadvantage that an additional step - making production more complex - is needed for printing or lettering the marker strip, or perforating letters in it, at regular distances along the strip. A different marker strip has to be used for each product variant.

Especially with mass products such as insulator element, it is important to have a marking system which is as simple as possible and thus cost efficient.

Therefore it seems to be advantageous to provide an appropriately marked mineral wool product and a method or device for the production of such a product, the undesired presence of a foreign substance on the surface of the finished mineral wool product being largely avoided and, at the same time, the product mark being simple, efficient, reliable and permanent. The method and the device for producing such a product should likewise be simple and efficient and, in particular, space-saving. In particular, an insulator element of the above-mentioned type should be provided during its production with an uncomplicated and cost-efficient mark which, especially for purposes of material recovery and recycling, can provide information about the properties of the insulator element and its origin. In addition, the mark must be of a nature which fulfils the requirements that apply to the material properties of insulator elements.

Such a mineral wool product is e.g. disclosed in the German patent DE 195 42 403 A1. This document describes the marking of mineral wool products by for example heating different spots of the mineral wool product or by embossing. By these procedures the marks are only applied on the upper most surface of the mineral wool products. By reason of this it cannot be excluded that the marks will disappear by abrasion or flaking or the like, especially under rough conditions e.g. by handling on a building lot. On the other hand it is necessary that the marks could still be recognized after a long time to correctly recycle these mineral wool products e.g. in fact of a redecoration or after a demolition of a house or the like. Such a recycling is nowadays regulated by law in many countries. Thus a safe marking of mineral wool products has become more important over the last few years.

Therefore, the problem which has to be solved is the providing of improved marks for mineral wool products which will lead to high robust markings.

This problem is solved by a mineral wool product concerning the claim 1, a method of producing such a mineral wool product concerning the claim 17 and a device for the production of such a mineral wool product concerning the claim 24. Further advantageous developments are part of the dependent claims.

Mineral wool products are usually manufactured by generating mineral wool fibres and strands from a molten mineral charge by way of a fiberization unit and a blowing device, and forming the fibres into mineral wool - to which a binder is added - in a blow chamber. The binder-containing mineral wool is collected as a strip-like blanket on a conveyor device which transports the thus-formed mineral wool blanket into and through a curing oven. In and/or before the curing oven the wool blanket is compressed before the influence of heat on the binder makes the blanket cure in the form of a mineral wool body.

An essential feature of this invention is that the mark is applied to the surface of the mineral wool product at a stage prior to curing of the mineral wool body, so that when the mineral wool body does cure, the mark is embedded permanently therein. As a result, the finished mineral wool product requires no subsequent processing, and the disadvantage of having to apply foreign substances - used in the prior art for marking - to the surface of the mineral wool product is eliminated. Instead, this invention provides for the mark to be embedded in the mineral wool body in such a way that through subsequent curing of the binder, it is virtually enclosed within the mineral wool body. As a result, the surface of the mineral wool body is almost uniform and homogeneous, without having any undesirable foreign substances on it.

The mark according to the invention preferably consists of a colorant or of another agent which reacts with the binder, the mineral wool, or with itself during the curing process, thus undergoing a conversion which causes a colour change. The colorant or other agent is applied to the surface zone of the as yet uncured mineral wool blanket by means of impregnating, pouring, brushing or the like. Since liquid media of this kind are preferably introduced before the mineral wool blanket is compressed, complete penetration of the liquid medium into the surface zone of the wool blanket is facilitated by the mineral wool's loose, unstructured form.

Alternatively, the mark can take the form of an insert which is pressed into the surface zone of the mineral wool blanket before and/or during compression and curing of the blanket. Use can be made, for example, of an already cured and printed mineral wool tape. This method, too, produces a uniform mineral wool body without any foreign substances. Instead of a printed mineral wool tape it is also possible to use a tape which differs in colour from the mineral wool body and which contains the mark in punched-out form. With this useful alternative, in particular, permanent crosslinking of the insert with the mineral wool body is achieved, together with the formation of a uniform and homogeneous surface, by pressing the tape into the as-yet uncured mineral wool blanket and by the subsequent curing of the binder. To introduce the insert into the mineral wool body, it is preferable to provide an embedding device which contains the insert in rolled-up form in a feed unit, the insert being transferred to the mineral wool blanket by means of a positioning mechanism, e.g. a roll.

Another advantageous way of applying a mark before the mineral wool body has completely cured is to impart a relief surface to the mineral wool body - either before and/or during compression and curing of the mineral wool blanket - by means of embossing elements with a negative or opposing surface structure compared to the intended mark. This can be done, for example in the curing oven, by providing embossing elements on the conveyor and/or compression unit in the curing oven, e.g. in the form of conveyor panels. The embossing elements thus impart a relief surface in the form of regularly spaced marks to the mineral wool body while it is in the curing oven. Because the binder cures simultaneously, the relief surface is maintained permanently.

Alternatively, a relief surface can be incorporated into the surface of the mineral wool body before the mineral wool blanket enters the curing oven. Preferably, the surface embossing step is combined with initial compression of the mineral wool blanket before the latter enters the curing oven. This can be effected, for example, by means of a smoothing roll which has on its cylindrical surface a surface structure that corresponds to the mark to be produced. In combination with a compression unit, the smoothing roll can, for example, be designed as one of a pair of opposing rolls located in front of the entrance to the curing oven. As with the embodiment in which embossing elements are provided in the curing oven, the smoothing roll repeatedly applies regularly spaced marks to the mineral wool product. By varying the diameter of the smoothing roll, the distance between the individual marks applied to the mineral wool product can be varied. Since there is a risk that if the surface of the mineral wool blanket is embossed before the blanket has cured the mark may be destroyed again during subsequent processing, it is to advantage if embossing elements located upstream of the curing oven are heated, so that when the embossing elements make contact with the as yet uncured mineral wool, the binder will cure to a certain degree, at least in the surface region. This will provide the surface structure generated by the embossing elements with a certain amount of stability for subsequent treatment in the curing oven. Accordingly, where a smoothing roll is used, the invention provides for this to be heated, for example by having the roll pass a heating element while it rotates. However, all kinds of possible heating means are conceivable here.
Yet another alternative for structuring the surface of the mineral wool blanket before it enters the curing oven is to provide embossing elements having corresponding surface structures on a chain conveyor, which can be located, for example, upstream of an initial compression unit. In this case, too, it is advisable to design the embossing elements such that they can be heated, so that initial curing of the structured surface zone takes place before subsequent processing steps, i.e. compression and curing.

It is to advantage for the mark to comprise letters, numbers, pictograms or other elements that may be depicted, for example bar codes, which can contain relevant information.

The higher the density of the mineral wool product, the more evident the mark according to the invention will be in its surface structure. With densities exceeding 40 kg/m², therefore, embossing elements inside the curing oven are suitable, since mineral wool products of such density are sufficiently stable to permanently retain the surface structure. For all commonly encountered densities, by way of contrast, the mark is best applied upstream of the curing oven, in particular by means of the other embodiments described here.

According to another solution, at least one set of preferably coloured thread elements is located on and maybe in the insulator element; it is also possible to use just one thread element featuring all the marking elements in colour (key-word: Mikado). It is expedient to use one or more sets of coloured thread elements on the insulator element. A set of coloured thread elements is understood to mean at least one thread element but preferably two or more spaced thread elements, each of which is a certain colour. It is also possible for one or more thread elements to comprise differently coloured segments (key-word: Mikado).

The thread elements are preferably arranged on one or both of the insulator element's main surfaces. It is also possible, however, to include the thread elements during production of the mineral wool mat, so that they are an integral component of the insulator element.

It is especially useful to arrange the thread elements such that they run in the longitudinal direction of the insulator element. This makes it particularly easy to apply the mark during the production process, as becomes evident from the special embodiment described below. In particular, the thread elements can be arranged such that they are equally spaced from one another. As a rule, a certain number of colours are specified, including black, white and colourless, which should be easy to differentiate. Combining thread elements in certain numbers or in certain colour sequences provides a means of encoding information such as mechanical and/or physical properties, composition, product name and so on. The information contained in the insulator element mark can be decoded with the help of a list provided by the manufacturer, which contains the meaning of the individual colour combinations.

To mark an insulator element, one or preferably more, in particular two to six thread elements are used. The scope of the information that can be contained in a set of coloured thread elements increases with the number of threads. Thus a set of x thread elements provides 4^{x} possible combinations and can thus be used to identify 4^{x} different characteristics. It is especially useful to use four differently coloured thread elements, since this will provide 256 possible combinations. There is no problem in selecting four colours that are easy to distinguish from one another. Besides this, a thread count of four is sufficiently small to permit easy identification. It is by all means possible, however, to use a different number of colours and/or a different number of thread elements in a set.

Since construction materials - including the insulating elements referred to - are used in applications involving differing temperatures that are often far in excess of room temperature, the insulator element's mark must also be of a material which shows temperature stability throughout the service life of the insulator element and beyond. Moreover, insulator elements, for example of glass wool, are generally non-combustible. The properties of the insulating mat and the support dictate the minimum requirements which the material for the mark must satisfy, since otherwise the mark cannot fulfil the intended purposes.

Glass-fibre threads, textile glass yarns and twined glass yarns are materials that have these properties. These thread elements, in particular, are inexpensive and easy to handle in storage.

In addition, one or two sets of thread elements can be affixed to the insulator element in such a way as to provide an orientation aid when the insulator element is being fitted. For example, the upper and lower sides of an insulator element, which are optically identical, can be distinguished by suitable application of a mark.

In a special embodiment, a support is fixed to at least one of the surfaces of the insulating mat or blanket.

The support usually comprises a mesh, a weave or a net. It can be made from various materials, such as metal, plastics or mineral fibres. Usually, the support is in the form of wire mesh, woven wire cloth or wire netting.

The support is fixed to the insulator element mat, which consists of mineral wool or, preferably, of rock wool, for example by sewing or quilting it on.

As is shown by reference to a special embodiment, it is technically very easy and thus also cost-efficient to position the thread elements between the mat and the support. The thread elements are simply advanced to the mat or blanket and then clamped between mat and support.

Additional advantages, characteristics and features of this invention become apparent from the following detailed description, which is based on the enclosed, purely diagrammatic drawings.
- Fig. 1: is a three-dimensional, partly cutaway view of part of a device for manufacturing a mineral wool product;
- Fig. 2: is a three-dimensional, partly cutaway view of another embodiment of a device for manufacturing a mineral wool product;
- Fig. 3: is a three-dimensional, partly cutaway view of another embodiment of a device for manufacturing a mineral wool product;
- Fig. 4: is a three-dimensional, partly cutaway view of another embodiment of a device for manufacturing a mineral wool product;
- Fig. 5: is a three-dimensional, partly cutaway view of another embodiment of a device for manufacturing a mineral wool product;
- Fig.6 a) and b): are sectional views through embodiments of the mineral wool products of the invention.
- Fig. 7: is a top view of the insulator element.
- Fig. 8: shows a device for attaching the mark to an insulator element.

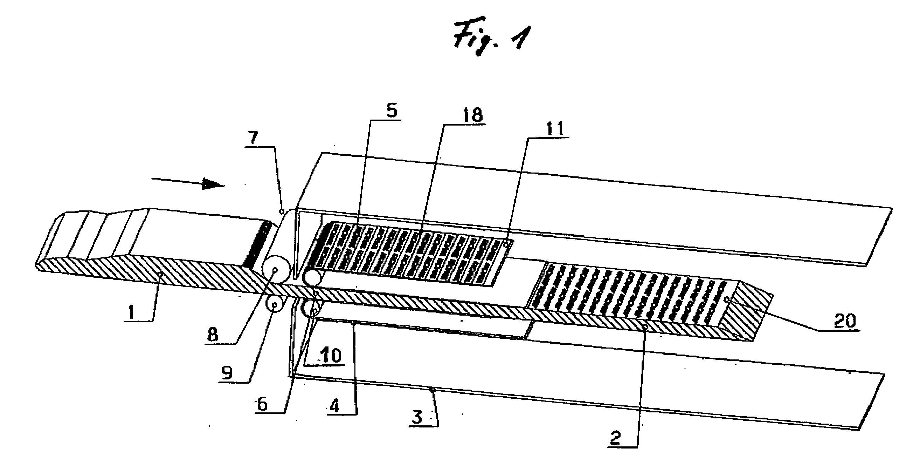

Figs. 1 to 5 all show - in purely diagrammatic form - part of a device or facility for the production of mineral wool products according to this invention. The most important of the parts shown are a curing oven 3, also called tunnel furnace, therein a transport device 4 with interjointed conveyor panels 11 which are passed in an endless loop around the idle rolls 10. Fig. 1 also shows a compression unit 7 in front of the entrance 6 to the curing oven 3. The compression unit 7 consists of two rolls 8 and 9 disposed opposite to each other. Figs. 1 to 5 do not show the following parts of the device for producing mineral wool products: the fiberizing unit, in which mineral wool fibres and strands are drawn from a molten mineral charge; the device with which the fibres and strands - drawn to wool - have a binding agent applied and are collected in the form of a mineral wool blanket 1 on a conveyor belt. On the contrary, all the drawings (Figs. 1-5) only show the mineral wool blanket once it is in position on a conveyor device such as a loop conveyor belt. The fiberizing unit and the device for adding the binder and collecting the binder-containing mineral wool into a mineral wool blanket are not shown in Figs. 1 - 5 because they do not differ from the standard equipment described in the prior art.

The essential feature of the embodiments according to the invention is to be seen in the fact that a marking device is provided in the area of the curing oven 3, the compression unit 7, or upstream thereof.

According to the embodiment of Fig. 1, the marking device is part of the conveyor device 4 in the curing oven 3, and is designed such that the conveyor panels 11, so-called flights, which are interjointed to form a loop conveyor belt, have a surface structure 18 which complements the structure required as mark 20 on the finished mineral wool body 2.

In the embodiment shown, the mark 20 takes the form of the lettering "ISOVER", by way of example. However, any other kind of mark, e.g. pictograms, numbers, bar codes or the like is conceivable..

The mineral wool product 2 is marked by the device according to the embodiment of Fig. 1 in the following way: as the mineral wool blanket 1 passes through the curing oven 3, the surface structure 18 of the conveyor panels 11 is imprinted in the surface of the mineral wool blanket as it cures, so that surface impressions and/or incisions are left which give the fully cured mineral wool product 2 a relief surface. To this end it is preferable if the surface structure 18 and the conveyor panels 11 in general are of perforated design, because in order to cure the binder, hot air is blown from underneath up through the conveyor panels 11. The relief surface represents the mark 20, since when the marked surface of the mineral wool product 2 is exposed or viewed appropriately from the side, the relief surface throws a shadow which produces a visible mark 20.

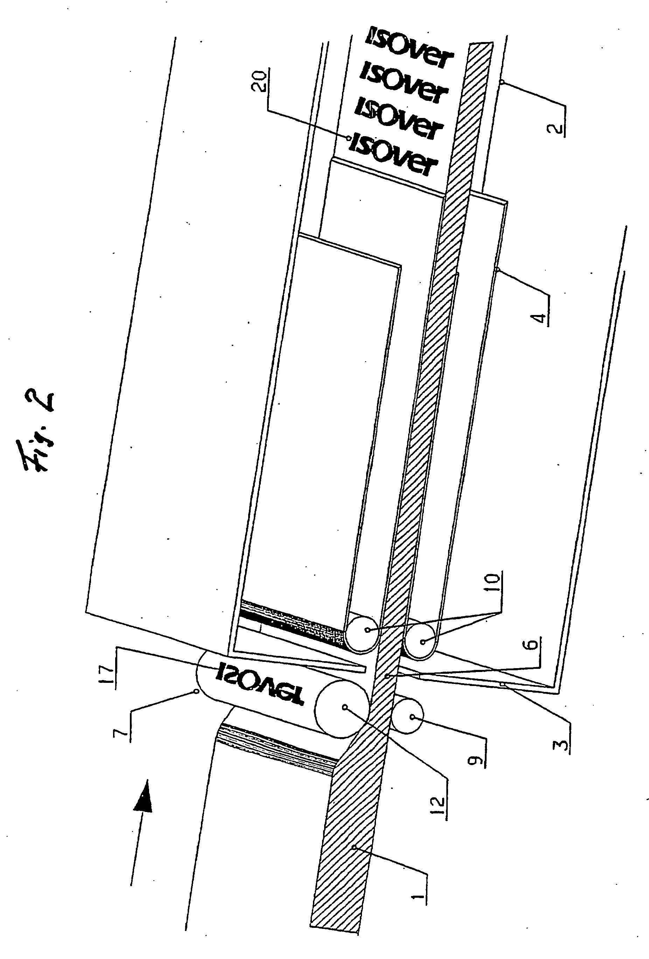

In another embodiment, shown in Fig. 2, a relief surface serving as mark 20 is likewise formed on the finished mineral wool product 2. In this case, however, the surface of the mineral wool blanket 1 is not structured by embossing the blanket 1 with the conveyor device 4 in the curing oven 3, but earlier on, while the mineral wool blanket 1 is being compressed prior to reaching the entrance 6 to the curing oven 3. To this end, a marking device is provided as part of the compression unit 7, which precompresses the mineral wool blanket 1 before it enters the curing oven 3. In the embodiment shown, the compression unit consists of a pair of spaced rolls 9 and 12, which, by means of the space between them, determine the thickness of the mineral wool blanket 1. The roll 12 located on the side of the mineral wool blanket 1 to which the mark 20 is to be applied has on its cylindrical surface a surface structure 17 which again complements the mark 20 to be produced in the mineral wool blanket 1. Roll 12 also has a heating means (not shown) and can thus be heated. When the mineral wool blanket 1 passes through the compression unit 7, the surface structure 17 is pressed into the surface of the mineral wool blanket 1, producing corresponding depressions therein. At the same time, the heating means heats roll 12 to a temperature which causes initial curing in the surface zone of mineral wool blanket 1, so that the depressions made in the surface of the mineral wool blanket 1 by the surface structure 17 of roll 12 are fixed. The reason for this is that the hot roll 12 causes the binder to cure in the surface zone, thus immobilising the mineral wool fibres and strands in the position they have assumed; the large number of points within the mineral wool at which crosslinks have formed prevent any further free movement of the mineral wool fibres and strands. To shape the thus pre-treated mineral wool blanket 1 with the at least partially cured surface layer or skin on one side into the final mineral wool product 2, the mineral wool blanket 1 may then undergo additional compression before it is cured in a curing oven 3.

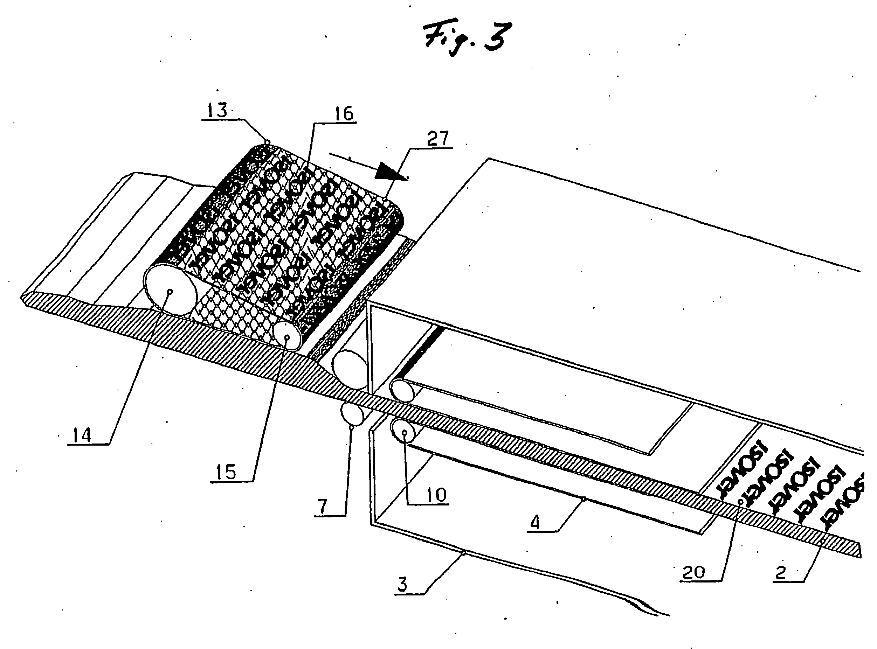

Fig. 3 shows an alternative embodiment of the device according to the invention for the production of mineral wool products; this embodiment includes a marking device 13 which is provided in addition to the compression unit 7 and the curing oven 3 and which is located upstream of these in the zone from which the mineral wool blanket 1 is fed towards the curing oven 3. The marking device 13 comprises a chain conveyor with a loop conveyor belt 16 which is guided around two idle rolls 14 and 15. On chain belt conveyor 16 embossing elements 27 are provided which in turn have a surface structure that complements the mark 20 to be applied to the mineral wool product 2.. The embossing elements 27 generate depressions and incisions on the surface of the mineral wool blanket 1, and these are again fixed by virtue of the fact that the heated chain belt conveyor 16, or at least the heated embossing elements 17, cause at least a restricted surface zone of the mineral wool blanket 1 to cure, as was the case in the embodiment of Fig. 2. However, according to the embodiment of Fig. 3, unlike that of Fig. 2, the mineral wool blanket 1 with its at least partially cured surface relief is pre-compressed by compression unit 7 in a subsequent, independent step. In the embodiment of Fig. 3, therefore, the marking device 13 and the compression unit 7 are independent and separate components of the device according to the invention for producing mineral wool products.

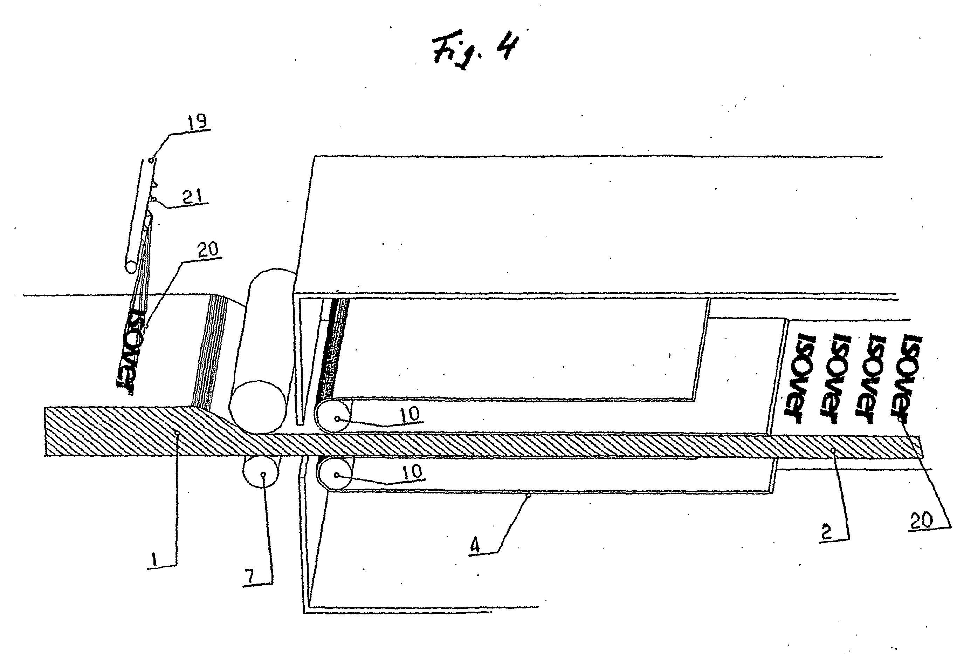

Fig. 4 shows yet another embodiment, in which, as was the case in the embodiment of Fig. 3, the marking device 19 is located upstream of the compression unit 7 and the curing oven 3, in the zone from which the mineral wool blanket 1 is fed towards the curing oven 3. However, this embodiment differs from that of Fig. 3 in that the marking device 19 does not generate any depressions or incisions in the surface zone of the mineral wool blanket 1, but is a spraying device which sprays - via spray nozzles 21 - a marking agent onto the surface of the mineral wool blanket 1 to be marked; the marking agent may be a colorant, for example, or an agent which becomes a marking agent by reacting with the binder or with the mineral wool or by undergoing a phase change. Since the binder has not yet cured at this stage, and the mineral wool has not yet been compressed, the agent sprayed onto the surface can very easily penetrate into the mineral wool and be deposited in areas close to the surface. As a result of subsequent compression and curing of the mineral wool blanket 1, the added agent is practically enclosed in the finished mineral wool product 1. The mark 20, however, is still clearly visible. To ensure clearly defined and localised application of the marking agent to the mineral wool blanket 1 it may be helpful to additionally insert a stencil between the spray nozzles 21 and the surface of the mineral wool blanket 1. A stencil of this kind has not been depicted in the embodiment shown. If the spray is applied at regular intervals to the mineral wool blanket 1 passing underneath, regularly spaced marks will be produced thereon.

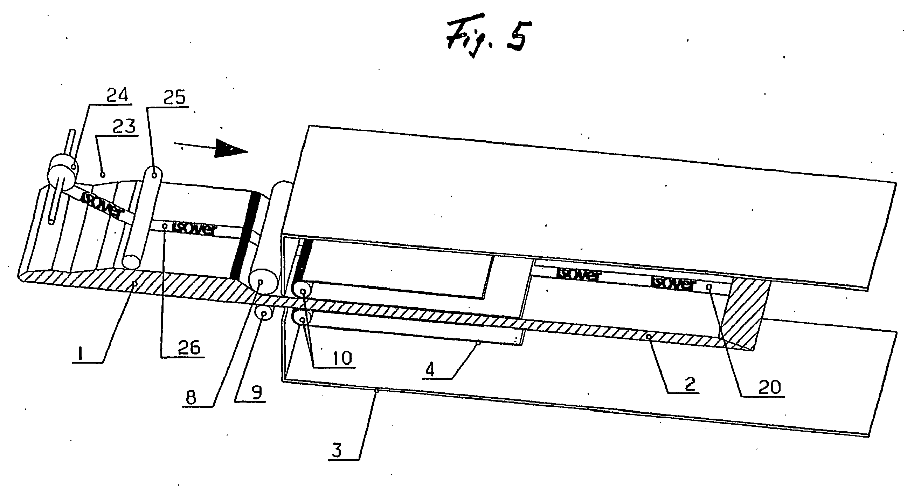

Another form of marking device 23 located upstream of the compression unit 7 and the curing oven 3 is shown in Fig. 5. In this case, the marking device 23 consists of a feed mechanism 24 and a positioning mechanism 25. The feed mechanism 24 comprises a rotatable reel onto which an insert 26 to be embedded as mark 20 in the mineral wool product 2 is wound. In the embodiment shown, the positioning mechanism 25 is a roll 25 with which the insert 26 - in the embodiment shown a mineral wool tape printed with the mark - is positioned on the surface of the mineral wool blanket 1. The insert 26 is pressed by the downstream compression unit 7 into the mineral wool blanket 1 and subsequently, during curing in the curing oven 3, forms firm crosslinks with the mineral wool by way of the binder. Instead of printed mineral wool tape it would also be conceivable to use a coloured tape - for example black tape - which has the marks in punched-out form.

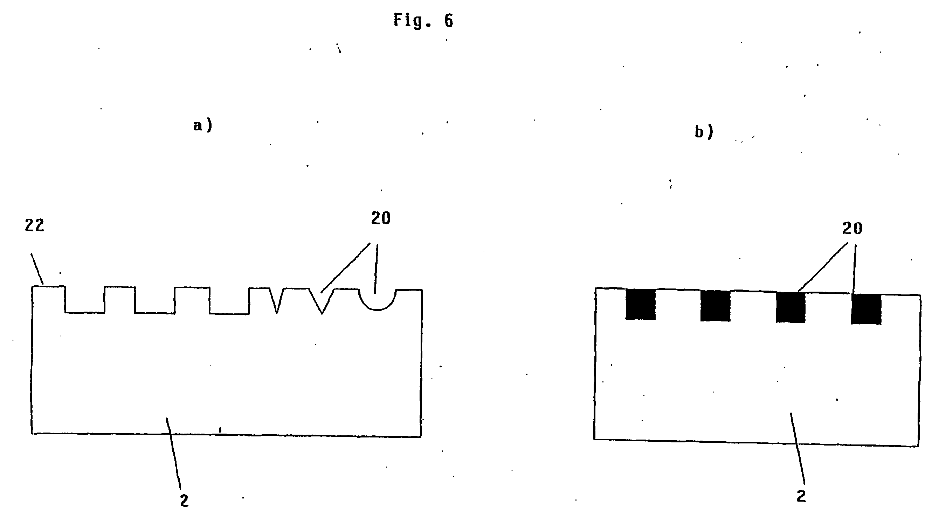

Each of the two parts a) and b) of Fig. 6 show a cross-section of a mineral wool product 2 according to the invention, in both cases with a mark 20 on one side of the product 2. The mineral wool product 2, the body of which has an essentially rectangular cross-section, has a surface layer 22 surrounding the entire mineral wool body. The surface layer 22 is characterised in that it forms the boundary layer between the mineral wool fibres and strands on the one hand, which are firmly crosslinked in the mineral wool with the binder, and the surrounding medium on the other hand. Unless it is scrutinised microscopically, the surface layer 22 is seen to have an essentially dense and smooth surface. As shown in Fig. 6a, the marked side of the mineral wool product 2 has depressions and incisions which are clearly recognisable against the essentially dense and smooth surface; the surface layer 22, however, is continuous, i.e. dense and smooth, along the depressions and incisions. This is explained by the fact that the final compression and curing of the mineral wool blanket and thus also of the surface layer does not take place until after or, at the earliest, during the structuring of the surface of the mineral wool blanket 1 (Fig. 6b).

The same applies to the embodiments in which the mark is produced by means of an added marking agent or a marking agent which is formed during curing, or by means of embedding an insert 26. Here too, the mark 20 is firmly incorporated in the surface layer 22 or directly beneath it, the surface layer 22 remaining smooth and dense. This means that there are no troublesome foreign substances on the outside of the surface layer 22 and thus outside the mineral wool body 2.

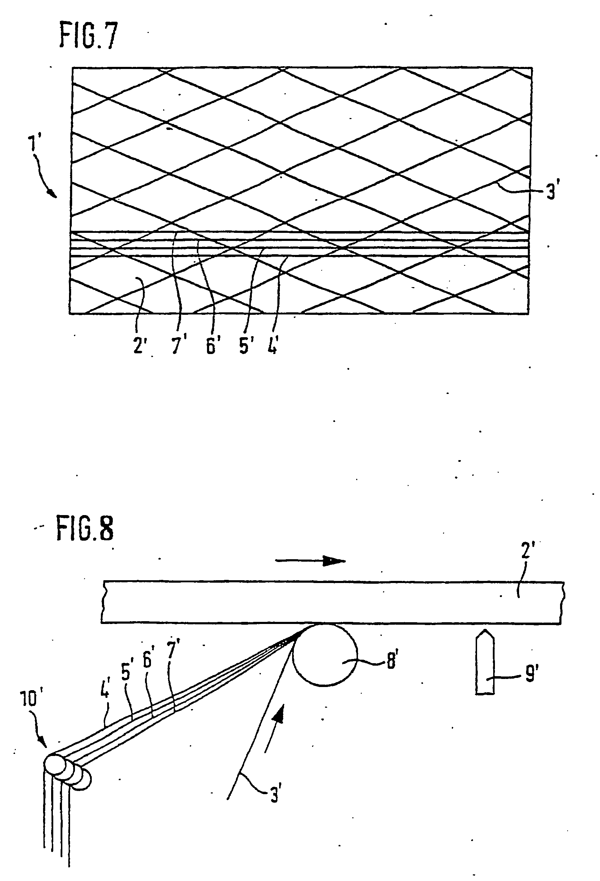

Figure 7 shows an insulator element 1' which consists of a mineral wool mat 2' and a wire-mesh-like support 3' that is fixed to the mat by stitching. In the lower section of the insulator element shown, four coloured twined yarns 4', 5', 6' und 7' can be seen located between the mat 2' and the screen-like support 3'. Each of the four threads shown in this embodiment can have one of the colours red, blue, yellow or black. Information about the product - for example, information about the manufacturer, the product name, and physical and mechanical properties of the insulator element - are encoded in the sequence of colours of the threads 4', 5', 6' and 7' (e.g. blue-blue-black-red). Details as to what information the different colour combinations stand for is provided by the manufacturer to whoever is recovering and recycling the insulator elements.

Figure 8 shows diagrammatically how the threads 4', 5', 6' and 7' are inserted between the mat 2' and the support 3'.

In the standard production process, the mineral wool mat 2' is advanced in the direction of the arrow via a roll 8'. The material for the support 3', in the form of a wire mesh, is advanced to the mat 2' via the roll 8'and fixed to the mat by means of a unit 9', for example a stitching device.

In addition, the coloured threads 4', 5', 6' and 7' serving as the mark, which are rolled up on reels 10, are fed between the mat 2' and the support 3', between which they are clamped.

## Claims

1. Mineral wool product having a mineral wool body which is preferably shaped as a rectangular parallelepiped and which contains binder and mineral wool fibres, and has a surface layer which delimits the mineral wool body and contains binder and mineral wool fibres, whereas the mineral wool product (2) is provided in a surface zone at least on one side of the mineral wool body surface, directly in the region of the surface layer (22) and/or by means of imparting a structure to the surface layer (22), with a mark (20), **characterised in that** said mark is connected firmly with the mineral wool body in and/or under the surface layer (22) by the mineral fibres being crosslinked under the influence of the cured binder.

2. The mineral wool product of claim 1, **characterised in that** when the marked surface of the mineral wool product is viewed from above, the mark (20) represents letters, numbers, pictograms and/or bar codes.

3. The mineral wool product according to one of the preceding claims, **characterised in that** the mark (20) comprises a marking agent that is added to the mineral wool body in the surface zone, or that is formed from an added agent when the binder cures, said marking agent being of a different colour to that of the mineral wool body.

4. The mineral wool product according to one of the preceding claims, **characterised in that** the mark (20) comprises an insert (26) embedded in the surface zone.

5. The mineral wool product of claim 4, **characterised in that** the insert (26) is a printed mineral wool tape.

6. The mineral wool product of claim 4, **characterised in that** the insert (26) is a tape which has a different colour to that of the mineral wool body and which features a punched-out pattern.

7. The mineral wool product according to one of the preceding claims, **characterised in that** the mark (20) comprises a relief surface with depressions and/or recesses in the surface zone of the mineral wool body.

8. The mineral wool product according to one of the preceding claims, **characterised in that** the intensity of the mark in the mineral wool product depends on the latter's density.

9. The mineral wool product according to claim 1 **characterised in that** it is in particular an insulating blanket (2') and **in that** at least one set of preferably coloured thread elements (4',5',6',7') is disposed on and/or in the mineral wool product.

10. The mineral wool product of claim 9, **characterised in that** one or more sets of thread elements (4',5',6',7') are disposed on one or both main surfaces of the insulator element (1').

11. The mineral wool product of claim 9 or 10, **characterised in that** the thread elements run in the longitudinal direction of the mineral wool product.

12. The mineral wool product according to one of the claims 9 to 11, **characterised in that** the thread elements (4',5',6',7') are spaced equidistantly from one another and are preferably arranged such that from the combination of colour and arrangement of individual thread elements (4',5',6',7') a certain constellation results which serves as a distinguishing mark for the mineral wool product, the thread elements (4',5',6',7') also preferably consisting of temperature resistant and/or non-combustible material, special preference being given to glass fibres, textile glass yarns and twined glass yarns.

13. The mineral wool product according to one of the claims 9 to 12, **characterised in that** one or more sets of coloured thread elements (4',5',6',7') are disposed on the mineral wool product such as to provide an orientation aid when the mineral wool product is being fitted.

14. The mineral wool product according to one of the claims 9 to 13, **characterised in that** a support (3'), especially a mesh, a weave or netting, is fixed to at least one surface of the insulating blanket or mat (2'), the support preferably being sewn onto the surface of the mat (2') or quilted therewith.

15. The mineral wool product of claim 14, **characterised in that** the set(s) of thread elements are disposed between the support (3') and the surface of the mat (2').

16. The mineral wool product according to one of the claims 9 to 15, **characterised in that** the thread elements (4',5',6',7') are an integral component of the mineral wool product.

17. Method of producing mineral wool products, especially a product according to one of the preceding claims, in which, in an initial step, mineral wool fibres or strands are drawn to wool and are collected together with binder to form a mineral wool blanket (1), the mineral wool blanket being compressed in subsequent steps to reduce its thickness and the binder being cured, thus producing a mineral wool body, **characterised in that** before and/or during the steps of compressing the mineral wool blanket (1) and curing the binder, a surface zone of at least one side of the mineral wool blanket (1) is provided with a mark (20) which, thanks to crosslinking of the mineral wool when the binder cures, is embedded permanently and firmly in the mineral wool body.

18. The method of claim 17, **characterised in that** the mark is introduced into the surface zone of the mineral wool blanket (1) by localised spraying and /or impregnating and/or brushing with an agent, and/or by structuring the surface zone to produce a firm relief surface and/or by pressing in an insert (26), so that once the mineral wool blanket has completed the compression and curing stages, the surface zone of the mineral wool body contains a permanent mark (20) which is firmly crosslinked with the mineral wool.

19. The method of claim 18, **characterised in that** during the curing process, the agent introduced into the mineral wool blanket (1) changes into a marking agent which differs in colour from the rest of the wool body, the agent reacting with the binder and/or mineral wool to form the marking agent, or undergoing a colour change.

20. The method of claim 18, **characterised in that** the relief surface is generated by structuring the surface zone of the mineral wool blanket (1) with an embossing element (11, 12, 27) which features a surface structure constituting the negative of the relief surface structure to be created.

21. The method of claim 18, **characterised in that** structuring with the embossing element is done in the curing oven or immediately upstream thereof; in the latter case, where the embossing element is located upstream of the curing oven, the embossing element is heated.

22. The method of claim 20, **characterised in that** by means of compressing the mineral wool blanket (1) with a heated embossing element prior to curing, an at least partially cured relief surface is obtained in the form of a skin, the shape of which is essentially retained during the following processing stages, including possible additional compression and the curing stage.

23. The method of claim 17, **characterised in that** a printed mineral wool tape or a tape which features punched-out patterns and differs in colour from the mineral wool body is used as insert (26).

24. Device for the production of mineral wool products - especially a product according to one of claims 1 to 16 - employing, in particular, a method according to one of claims 17 to 23 and having a fiberization unit for the production of mineral wool fibres or strands, a device for adding binder and collecting the binder-containing mineral wool in a mineral wool blanket (1), at least one compression unit (7) for compressing the mineral wool blanket (1), and a curing oven (3) for curing the binder in the mineral wool blanket (1), **characterised in that** a marking device (13, 19, 23) is also provided, which is located in and/or upstream of the curing oven (3), and which provides a surface zone of at least one side of the mineral wool blanket (1) with a mark (20) which is connected firmly with the mineral wool body in and/or under a surface layer (22) by mineral fibres being crosslinked under the influence of a cured binder.

25. The device of claim 24, **characterised in that** the marking device is a spraying, pouring, brushing or dipping facility (19) for localised application/introduction of an agent onto/into at least one surface zone of the mineral wool blanket (1).

26. The device of claim 25, **characterised in that** the spraying, pouring, brushing or dipping facility (19) is located upstream of the compression unit (7).

27. The device of claim 24, **characterised in that** the marking device is part of the conveyor and/or compression unit (4) in the curing oven (3) and includes embossing elements in the form of conveyor panels (11) which have a surface structure.

28. The device of claim 24, **characterised in that** the marking device is part of a compression unit (7) located upstream of the curing oven (3).

29. The device of claim 28, **characterised in that** the marking device is designed as a heated smoothing roll (12), the cylindrical surface of which features a surface structure.

30. The device of claim 28, **characterised in that** the marking device is part of a chain conveyor (13) and includes heated embossing elements (27) which feature a surface structure.

31. The device of claim 24, **characterised in that** the marking device includes an embedding device (23) located upstream of the curing oven (3) and of a compression unit (7).

32. The device of claim 31, **characterised in that** the embedding device (23) features a feed mechanism (24) for an insert (26) and a positioning mechanism (25) for positioning the insert (26) on the mineral wool blanket.

33. The device of claim 32, **characterised in that** the feed mechanism (25) is part of a subsequent compression unit (7).

## Patentansprüche

1. Produkt aus Mineralwolle mit einem Körper aus Mineralwolle, der bevorzugt als rechteckiges Parallelepiped geformt ist und das ein Bindemittel und Mineralfasern enthält, und eine Oberflächenschicht aufweist, welche den Körper aus Mineralwolle abgrenzt und Bindemittel enthält und Mineralwollfasern, wobei das Produkt aus Mineralwolle (2) in einem Oberflächengebiet auf wenigstens einer Seite der Oberfläche des Körpers aus Mineralwolle direkt im Bereich der Oberflächenschicht (22) und/ oder mittels Verleihen der Oberflächenschicht (22) einer Struktur, mit einer Markierung (20) ausgestattet ist, **dadurch gekennzeichnet, dass** die Markierung fest mit dem Körper aus Mineralwolle in und/ oder unter der Oberflächenschicht (22) durch die Mineralfasern verbunden ist, welche unter dem Einfluss des gehärteten Bindemittels vernetzt sind.

2. Produkt aus Mineralwolle nach Anspruch 1 **dadurch gekennzeichnet, dass**, wenn die markierte Oberfläche des Produktes aus Mineralwolle von oben betrachtet wird, die Markierung (20) Buchstaben, Zahlen, Piktogramme und/ oder Balkencodes darstellt.

3. Produkt aus Mineralwolle nach irgendeinem der vorhergehenden Ansprüche **dadurch gekennzeichnet, dass** die Markierung (20) ein Markierungsagens aufweist, das dem Körper aus Mineralwolle in dem Oberflächengebiet hinzugefügt wird, oder das aus einem Agens gebildet wird, welches hinzugefügt wird, wenn das Bindemittel aushärtet, wobei das Markierungsagens von anderer Farbe ist als der Körper aus Mineralwolle.

4. Produkt aus Mineralwolle nach irgendeinem der vorhergehenden Ansprüche **dadurch gekennzeichnet, dass** die Markierung (20) eine Einlage (26) aufweist, welche in dem Oberflächengebiet eingebettet ist.

5. Produkt aus Mineralwolle nach Anspruch 4 **dadurch gekennzeichnet, dass** die Einlage (26) ein bedrucktes Band aus Mineralwolle ist.

6. Produkt aus Mineralwolle nach Anspruch 4 **dadurch gekennzeichnet, dass** die Einlage (26) ein Band ist, das eine unterschiedliche Farbe wie der Körper aus Mineralwolle hat und das ein herausgestanztes Muster aufweist.

7. Produkt aus Mineralwolle nach irgendeinem der vorhergehenden Ansprüche **dadurch gekennzeichnet, dass** die Markierung (20) eine Reliefoberfläche aufweist mit Vertiefungen und/ oder Ausnehmungen in dem Oberflächengebiet des Körpers aus Mineralwolle.

8. Produkt aus Mineralwolle nach irgendeinem der vorhergehenden Ansprüche **dadurch gekennzeichnet, dass** die Intensität der Markierung in dem Produkt aus Mineralwolle von der Dichte des letzteren abhängt.

9. Produkt aus Mineralwolle nach Anspruch 1 **dadurch gekennzeichnet, dass** es speziell eine Isoliermatte (2') darstellt und dass wenigstens ein Satz von bevorzugt gefärbten Fadenelementen (4', 5', 6', 7') auf und/ oder in dem Produkt aus Mineralwolle angeordnet ist.

10. Produkt aus Mineralwolle nach Anspruch 9 **dadurch gekennzeichnet, dass** einer oder mehrere Sätze aus Fadenelementen (4', 5', 6', 7') auf beiden Hauptoberflächen des Isolationselementes (1') angeordnet sind.

11. Produkt aus Mineralwolle nach Anspruch 9 oder 10 **dadurch gekennzeichnet, dass** die Fadenelemente in Längsrichtung des Produktes aus Mineralwolle verlaufen.

12. Produkt aus Mineralwolle nach irgendeinem der Ansprüche 9 bis 11 **dadurch gekennzeichnet, dass** die Fadenelemente (4', 5', 6', 7') in gleichem Abstand voneinander angeordnet sind und bevorzugt derartig angeordnet sind, dass aus der Kombination der Farbe und der Anordnung der individuellen Fadenelemente (4', 5', 6', 7') sich eine bestimmte Konstellation ergibt, welche als Unterscheidungsmarkierung für das Produkt aus Mineralwolle dient, wobei die Fadenelemente (4', 5', 6', 7') ebenso bevorzugt aus temperaturbeständigem und/ oder nicht brennbarem Material bestehen, mit spezieller Bevorzugung von Glasfasern, Textilglasgarnen und gepaarten Glasgarnen.

13. Produkt aus Mineralwolle nach irgendeinem der Ansprüche 9 bis 12 **dadurch gekennzeichnet, dass** einer oder mehrere der Sätze von bunten Fadenelementen (4', 5', 6', 7') auf dem Produkt aus Mineralwolle angeordnet sind, so dass sie eine Orientierungshilfe bereitstellen, wenn das Produkt aus Mineralwolle eingepasst wird.

14. Produkt aus Mineralwolle nach irgendeinem der Ansprüche 9 bis 13 **dadurch gekennzeichnet, dass** eine Auflage (3'), speziell ein Netz, eine Bahn oder ein Geflecht an wenigstens einer Oberfläche der Isolationsdecke oder Matte (2') angebracht ist, wobei die Auflage bevorzugt auf die Oberfläche der Matte (2) genäht ist oder auf sie gesteppt ist.

15. Produkt aus Mineralwolle nach Anspruch 14 **dadurch gekennzeichnet, dass** die Sätze von Fadenelementen zwischen der Auflage (3') und der Oberfläche der Matte (2') angeordnet sind.

16. Produkt aus Mineralwolle nach irgendeinem der Ansprüche 9 bis 15 **dadurch gekennzeichnet, dass** die Fadenelemente (4', 5', 6', 7') ein integraler Bestandteil des Produktes aus Mineralwolle sind.

17. Verfahren zur Herstellung von Produkten aus Mineralwolle, speziell einem Produkt nach irgendeinem der vorhergehenden Ansprüche, in welchen in einem Ausgangsschritt Mineralwollfasern oder Stränge zu Wolle gezogen werden und mit einem Bindemittel aneinander angelagert werden, um eine Decke (1) aus Mineralwolle zu bilden, wobei die Decke aus Mineralwolle in nachfolgenden Schritten komprimiert wird, um ihre Dicke zu verringern und das Bindemittel ausgehärtet wird, wodurch der Körper aus Mineralwolle hergestellt wird, **dadurch gekennzeichnet, dass** vor und/ oder während den Schritten der Komprimierung der Mineralwolldecke (1) und der Aushärtung des Bindemittels ein Oberflächengebiet von wenigstens einer Seite der Decke aus Mineralwolle (1) mit einer Markierung (20) ausgestattet wird, welche dank der Vernetzung der Mineralwolle, wenn das Bindemittel aushärtet, permanent und fest in den Körper aus Mineralwolle eingebettet wird.

18. Verfahren nach Anspruch 17 **dadurch gekennzeichnet, dass** die Markierung in das Oberflächengebiet der Decke aus Mineralwolle (1) eingebracht wird, durch lokalisiertes Aufsprühen, und/ oder Imprägnieren, und/ oder Bürsten mit einem Agens, und/ oder durch Strukturierung des Oberflächengebiets, um ein festes Oberflächenrelief zu produzieren und/oder durch Eindrücken einer Einlage (26), so dass, wenn einmal die Mineralwolldecke die Kompressions- und Aushärtestadien durchlaufen hat, der Oberflächenbereich des Körpers aus Mineralwolle eine permanente Markierung (20) aufweist, die fest mit der Mineralwolle vernetzt ist.

19. Verfahren nach Anspruch 18 **dadurch gekennzeichnet, dass** während des Aushärteprozesses das der Mineralwolldecke (1) hinzugefügte Agens sich in ein Markierungsagens verändert, welches sich in der Farbe vom Rest des Körpers aus Mineralwolle unterscheidet, wobei das Agens mit dem Bindemittel reagiert und/ oder der Mineralwolle, um das Markierungsagens zu bilden, oder eine Farbveränderung erfährt.

20. Verfahren nach Anspruch 18 **dadurch gekennzeichnet, dass** die Reliefoberfläche durch Strukturierung des Oberflächengebiets der Mineralwolldecke (1) mit einem Prägeelement (11, 12, 27) erzeugt wird, das eine Oberflächenstruktur aufweist, welche das Negativ zu der zu erzeugenden Oberflächenreliefstruktur bildet.

21. Verfahren nach Anspruch 18 **dadurch gekennzeichnet, dass** die Struktur mit dem Prägeelement in dem Aushärteofen durchgeführt wird oder unmittelbar stromaufwärts davon; im letzteren Fall, wo das Prägeelement stromaufwärts vom Aushärteofen angeordnet ist, das Prägeelement aufgeheizt wird.

22. Verfahren nach Anspruch 20 **dadurch gekennzeichnet, dass** mittels der Kompression der Mineralwolldecke (1) mit einem erhitzten Prägeelement vor der Aushärtung eine wenigstens teilweise ausgehärtete Reliefoberfläche in der Form einer Haut erhalten wird, wobei die Form derselben im Wesentlichen während der nachfolgenden Verarbeitungsstufen aufrechterhalten wird, einschließlich möglicher zusätzlicher Kompression und der Aushärtungsstufe.

23. Verfahren nach Anspruch 17 **dadurch gekennzeichnet, dass** ein gedrucktes Mineralwollband, oder ein Band, das herausgestanzte Muster aufweist und das sich in der Farbe vom Körper aus Mineralwolle unterscheidet, als Einlage (26) verwendet wird.

24. Vorrichtung zur Herstellung von Produkten aus Mineralwolle - speziell einem Produkt nach irgendeinem der Ansprüche 1 bis 16 - welche im speziellen ein Verfahren nach irgendeinem der Ansprüche 17 bis 23 einsetzt und eine Fasereinheit zur Herstellung von Mineralwollfasern oder Strängen aufweist, eine Vorrichtung zur Hinzufügung von Bindemittel und zum Sammeln der Bindemittel enthaltenden Mineralwolle in einer Mineralwolldecke (1), wenigstens eine Kompressionseinheit (7) zum Komprimieren der Mineralwolldecke (1), und einen Aushärteofen (3) zum Aushärten des Bindemittels in der Mineralwolldecke (1), **dadurch gekennzeichnet, dass** ebenso eine Markierungsvorrichtung (13, 19, 23) bereitgestellt ist, welche in und/ oder stromaufwärts des Aushärteofens (3) angeordnet ist, und welche einen Oberflächenbereich auf wenigstens einer Seite der Mineralwolldecke (1) mit einer Markierung (20) bereitstellt, welche fest mit dem Körper aus Mineralwolle in und/ oder unter einer Oberflächenschicht (22) durch Mineralwollfasern verbunden wird, die unter dem Einfluss eines ausgehärteten Bindemittels vernetzt sind.

25. Vorrichtung nach Anspruch (24) **dadurch gekennzeichnet, dass** die Markierungsvorrichtung eine Sprüh-, Gieß-, Bürst- oder Tauchanlage (19) ist, zur lokalen Aufbringung/Einbringung eines Agens auf/ in wenigstens ein Oberflächengebiet der Mineralwolldecke (1).

26. Vorrichtung nach Anspruch 25 **dadurch gekennzeichnet, dass** die Sprüh-, Gieß-, Bürst- oder Tauchanlage (19) stromaufwärts der Kompressionseinheit (7) angeordnet ist.

27. Vorrichtung nach Anspruch 24 **dadurch gekennzeichnet, dass** die Markierungsvorrichtung einen Teil der Förder- und/ oder Kompressionseinheit (4) im Aushärteofen (3) darstellt und Prägeelemente in der Form von Förderpaneelen (11) enthält, die eine Oberflächenstruktur aufweisen.

28. Vorrichtung nach Anspruch 24 **dadurch gekennzeichnet, dass** die Markierungsvorrichtung einen Teil einer Kompressionseinheit (7) darstellt, die stromaufwärts des Aushärteofens (3) angeordnet ist.

29. Vorrichtung nach Anspruch 28 **dadurch gekennzeichnet, dass** die Markierungsvorrichtung als erhitzte Glättungswalze (12) ausgestaltet ist, deren zylindrische Oberfläche eine Oberflächenstruktur aufweist.

30. Vorrichtung nach Anspruch 28 **dadurch gekennzeichnet, dass** die Markierungsvorrichtung den Teil eines Kettenförderers (13) darstellt und erhitzte Prägeelemente (27) aufweist, welche eine Oberflächenstruktur besitzen.

31. Vorrichtung nach Anspruch 24 **dadurch gekennzeichnet, dass** die Markierungsvorrichtung eine Einbettungsvorrichtung (23) enthält, die stromaufwärts des Aushärteofens (3) und von einer Kompressionseinheit (7) angeordnet ist.

32. Vorrichtung nach Anspruch 31 **dadurch gekennzeichnet, dass** die Einbettungsvorrichtung (23) einen Zuführmechanismus (24) für eine Einlage (26) aufweist und einen Positionierungsmechanismus (25) zur Positionierung der Einlage auf der Mineralwolldecke.

33. Vorrichtung nach Anspruch 32 **dadurch gekennzeichnet, dass** der Zuführmechanismus (25) einen Teil einer nachfolgenden Kompressionseinheit (7) darstellt.

## Revendications

1. Produit en laine minérale comportant un corps de laine minérale qui est, de préférence, configuré sous la forme d'un parallélépipède rectangle et qui contient un liant et des fibres de laine minérale, et présente une couche superficielle qui délimite le corps de laine minérale et qui contient un liant et des fibres de laine minérale, alors que le produit en laine minérale (2) est doté, dans une zone superficielle au moins sur un côté de la surface du corps de laine minérale, directement dans la zone de la couche superficielle (22) et/ou aux moyens de l'impression d'une structure sur la couche superficielle (22), avec une marque (20), **caractérisé en ce que** ladite marque est solidement liée au corps de laine minérale dans et/ou sous la couche superficielle (22) par les fibres minérales réticulées sous l'influence du liant traité thermiquement.

2. Produit en laine minérale selon la revendication 1, **caractérisé en ce que**, lorsque la surface marquée du produit en laine minérale est observée du dessus, la marque (20) représente des lettres, des nombres, des pictogrammes et/ou des codes à barres.

3. Produit en laine minérale selon l'une des revendications précédentes, **caractérisé en ce que** la marque (20) comprend un agent de marquage qui est ajouté au corps de laine minérale dans la zone de surface, ou qui est formée à partir d'un agent ajouté lorsque le liant est traité thermiquement, ledit agent de marquage étant d'une couleur différente de celle du corps en laine minérale.

4. Produit en laine minérale selon l'une des revendications précédentes, **caractérisé en ce que** la marque (20) comporte une pièce d'insertion (26) encastrée dans la zone de surface.

5. Produit en laine minérale selon la revendication 4, **caractérisé en ce que** la pièce d'insertion (26) est un ruban en laine minérale imprimé.

6. Produit en laine minérale selon la revendication 4, **caractérisé en ce que** la pièce d'insertion (26) est un ruban qui présente une couleur différente de celle du corps en laine minérale et qui représente un modèle découpé.

7. Produit en laine minérale selon l'une des revendications précédentes, **caractérisé en ce que** la marque (20) comprend une surface en relief présentant des zones en creux et/ou des évidements dans la zone de surface du corps en laine minérale.

8. Produit en laine minérale selon l'une des revendications précédentes, **caractérisé en ce que** l'intensité de la marque dans le produit en laine minérale dépend de la densité de ce dernier.

9. Produit en laine minérale selon la revendication 1, **caractérisé en ce qu'**il est, en particulier, une couverture isolante (2') et **en ce qu'**au moins un ensemble d'éléments de fils colorés, de préférence, (4', 5', 6', 7') est disposé sur et/ou dans le produit en laine minérale.

10. Produit en laine minérale selon la revendication 9, **caractérisé en ce que** un ou plusieurs ensemble(s) d'éléments de fil (4', 5', 6', 7') est (sont) disposé(s) sur l'une ou sur les deux surfaces principales de l'élément isolant (1').

11. Produit en laine minérale selon la revendication 9 ou 10, **caractérisé en ce que** les éléments de fil passent dans la direction longitudinale du produit en laine minérale.

12. Produit en laine minérale selon l'une des revendications 9 à 11, **caractérisé en ce que** les éléments de fil (4', 5', 6', 7') sont placés à égale distance l'un de l'autre et sont disposés, de préférence, de telle sorte qu'à partir de la combinaison de couleur et de l'agencement des éléments de fil individuels (4', 5', 6', 7'), il en résulte une certaine constellation qui sert de marque distinctive pour le produit en laine minérale, les éléments de fil (4', 5', 6', 7') étant aussi, de préférence, constitués d'un matériau résistant à la température et/ou non combustible, une préférence spéciale étant donnée aux fibres de verre, aux fils de verre textile et aux fils de verre entrelacés.

13. Produit en laine minérale selon l'une des revendications 9 à 12, **caractérisé en ce que** un ou plusieurs ensemble(s) d'éléments de fils colorés (4', 5', 6', 7') est (sont) disposé(s) sur le produit en laine minérale de façon à fournir une aide à l'orientation lorsque le produit en laine minérale est en cours d'ajustement.

14. Produit en laine minérale selon l'une des revendications 9 à 13, **caractérisé en ce qu'**un support (3') spécialement, un treillis, un toile ou un filet est fixé sur au moins une surface de la couverture isolante ou du matelas isolant (2'), le support étant cousu, de préférence, sur la surface du matelas (2') ou piqué avec elle.

15. Produit en laine minérale selon la revendication 14, **caractérisé en ce que** l'ensemble (les ensembles) d'éléments de fil est (sont) disposé(s) entre le support (3') et la surface du matelas (2').

16. Produit en laine minérale selon l'une des revendications 9 à 15, **caractérisé en ce que** les éléments de fil (4', 5', 6', 7') sont un composant intégré du produit en laine minérale.

17. Procédé de fabrication de produits en laine minérale, spécialement d'un produit selon l'une des revendications précédentes, dans lequel, dans une étape initiale, des fibres ou des fils de laine minérale sont retirés de la laine et sont collectés avec un liant pour former une couverture en laine minérale (1), la couverture en laine minérale étant comprimée dans des étapes ultérieures en vue de réduire son épaisseur et le liant étant traité thermiquement, fournissant ainsi un corps en laine minérale, **caractérisé en ce que**, avant et/ou pendant les étapes de compression de la couverture en laine minérale (1) et de traitement thermique du liant, une zone de surface d'au moins un côté de la couverture en laine minérale (1) est dotée d'une marque (20) qui, grâce à une réticulation de la laine minérale lorsque le liant est traité thermiquement, est insérée, de façon permanente et résistante, dans le corps de laine minérale.

18. Procédé selon la revendication 17, **caractérisé en ce que** la marque est introduite dans la zone de surface de la couverture en laine minérale (1) par une pulvérisation localisée et/ou une imprégnation et/ou un brossage avec un agent, et/ou en structurant la zone de surface afin de produire une surface à relief résistant et/ou en comprimant une pièce d'insertion (26), de sorte qu'une fois qu'on a achevé les étapes de compression et de traitement thermique de la couverture en laine minérale, la zone de surface du corps en laine minérale contient une marque permanente (20) qui est réticulée de façon résistante avec la laine minérale.

19. Procédé selon la revendication 18, **caractérisé en ce que** pendant le processus de traitement thermique, l'agent introduit dans la couverture en laine minérale (1) se transforme en agent de marquage qui est d'une couleur différente du reste du corps de laine, l'agent réagissant avec le liant et/ou la laine minérale pour former l'agent de marquage, ou subissant un changement de couleur.

20. Procédé selon la revendication 18, **caractérisé en ce que** la surface en relief est générée en structurant la zone de surface de la couverture en laine minérale (1) avec un élément de matriçage (11, 12, 27) qui représente une structure de surface constituant le négatif de la structure de surface en relief à réaliser.

21. Procédé selon la revendication 18, **caractérisé en ce que** la structuration avec l'élément de matriçage est réalisée dans le four de traitement ou immédiatement en amont de celui-ci ; dans le dernier cas, si l'élément de matriçage est placé en amont du four de traitement, l'élément de matriçage est chauffé.

22. Procédé selon la revendication 20, **caractérisé en ce qu'**au moyen d'une compression de la couverture en laine minérale (1) avec un élément de matriçage chauffé avant un traitement thermique, une surface à relief, traitée thermiquement, au moins partiellement, est obtenue sous la forme d'une peau, dont la configuration est essentiellement maintenue pendant les étapes suivantes de traitement, incluant une compression supplémentaire possible et l'étape de traitement thermique.

23. Procédé selon la revendication 17, **caractérisé en ce qu'**un ruban en laine minérale imprégné ou un ruban qui se **caractérise par** des modèles découpés et diffère en couleur du corps de laine minérale est utilisé en tant que pièce d'insertion (26).

24. Dispositif permettant la fabrication de produits en laine minérale - spécialement d'un produit selon l'une des revendications 1 à 16 - utilisant, en particulier, un procédé selon l'une des revendications 17 à 23, et comportant une unité de formation de fibres destinée à la production de fibres ou de brins de laine minérale, un dispositif pour ajouter un liant et collecter la laine minérale contenant le liant dans une couverture en laine minérale (1), au moins une unité de compression (7) permettant de comprimer la couverture en laine minérale (1), et un four de traitement thermique (3) pour traiter thermiquement le liant dans la couverture en laine minérale (1), **caractérisé en ce qu'**un dispositif de marquage (13, 19, 23) est également fourni, lequel est situé dans et/ou en en amont du four de traitement thermique (3), et lequel fournit une zone de surface sur au moins un côté de la couverture en laine minérale (1) dotée d'une marque (20) qui est fortement liée au corps de laine minérale dans et/ou sous une couche superficielle (22) par des fibres minérales qui sont réticulées sous l'influence d'un liant traité thermiquement.

25. Dispositif selon la revendication 24, **caractérisé en ce que** le dispositif de marquage est une installation pour pulvériser, verser, brosser ou immerger (19) destinée à l'application / l'introduction localisée d'un agent sur/dans au moins une zone de surface de la couverture en laine minérale (1).

26. Dispositif selon la revendication 25, **caractérisé en ce que** l'installation servant à pulvériser, verser, brosser ou immerger (19) est située en amont de l'unité de compression (7).

27. Dispositif selon la revendication 24, **caractérisé en ce que** le dispositif de marquage fait partie de l'unité de transport et/ou de compression (4) dans le four de traitement thermique (3) et comporte des éléments de matriçage sous la forme de panneaux de transport (11) qui présentent une structure en surface.

28. Dispositif selon la revendication 24, **caractérisé en ce que** le dispositif de marquage fait partie de l'unité de compression (7) située en amont du four de traitement thermique (3).

29. Dispositif selon la revendication 28, **caractérisé en ce que** le dispositif de marquage est conçu sous la forme d'un rouleau de lissage à chaud (12) dont la surface cylindrique représente une structure de surface.

30. Dispositif selon la revendication 28 **caractérisé en ce que** le dispositif de marquage fait partie d'un convoyeur à chaîne (13) et comporte des éléments de matriçage chauffés (27) qui représentent une structure de surface.

31. Dispositif selon la revendication 24, **caractérisé en ce que** le dispositif de marquage comporte un dispositif d'encastrement (23) placé en amont du four de traitement thermique (3) et d'une unité de compression (7).

32. Dispositif selon la revendication 31, **caractérisé en ce que** le dispositif d'encastrement (23) représente un mécanisme d'alimentation (24) destiné à une pièce d'insertion (26) et un mécanisme de positionnement (25) servant à placer la pièce d'insertion (26) sur la couverture en laine minérale.

33. Dispositif selon la revendication 32, **caractérisé en ce que** le mécanisme d'alimentation (24) fait partie d'une unité de compression complémentaire (7).
